# EUROPEAN PATENT APPLICATION

(11) **EP 1 298 346 A1**
(43) Date of publication of application: **02.04.2003**
(21) Application number: 02256714.3
(22) Date of filing: 26.09.2002
(51) Int. Cl.: F16D 69/02

(54) **Non-asbestos friction material**

(30) Priority: 27.09.2001 JP 2001297037
(71) Applicant: NISSHINBO INDUSTRIES, INC., Chuo-ku, Tokyo (JP)
(72) Inventor: Tsugawa, Kazuo, Nisshinbo Industries, Inc., Oura-gun, Gunma-ken (JP); Tosaka, Kaoru, Nisshinbo Industries, Inc., Oura-gun, Gunma-ken (JP)
(74) Representative: Stuart, Ian Alexander

(57) **Abstract**

A non-asbestos friction material is made of a molded and cured composition comprising a fibrous base other than asbestos, a binder and a filler. The filler includes spheres or beads of glass having a Vickers hardness (DPH, 300 gf) of at most 800 kg/mm². Friction materials thus constituted have a suitable friction coefficient, facilitate rust removal from the mating surface, and minimize noise generation and mating surface attack.

## Description

The present invention relates to non-asbestos friction materials. Preferred embodiments are highly suitable for use as brake pads, brake linings and clutch facings in automobiles and various kinds of industrial machinery.

### Prior Art

Ceramics such as aluminum oxide, silicon oxide and zirconium oxide are used as abrasive components to ensure the performance (e.g., friction coefficient, ease of rust removal from mating surface) of disk pads and other automotive friction materials.

However, particles of such ceramics, because of their high hardness and sharp angular shape, have certain detrimental effects on friction materials, including noise and attack of the mating surface. A need has been felt for a solution to this problem.

### SUMMARY OF THE INVENTION

It is therefore desirable to provide non-asbestos friction materials which ensure a good coefficient of friction and good ease of rust removal from the mating surface while minimizing noise and mating surface attack.

We have discovered that it can be advantageous to use spheres or beads of glass having a Vickers hardness (DPH, 300 gf) of at most 800 kg/mm² as part or all of the filler in a non-asbestos friction material. This may enable a coefficient of friction and an ease of rust removal that are fully adequate to be achieved and may also assure good results with regard to noise and mating surface attack.

Accordingly, the invention provides a non-asbestos friction material made by molding and curing a composition comprised of a fibrous base other than asbestos, a binder, and a filler which includes spheres or beads of glass having a Vickers hardness (DPH, 300 gf) of at most 800 kg/mm².

### DETAILED DESCRIPTION OF EMBODIMENTS

As noted above, the non-asbestos friction material of the invention is made by molding and curing a composition consisting primarily of a fibrous base, a binder and a filler.

The fibrous base may be any non-asbestos inorganic fiber or organic fiber ordinarily used in friction materials. Illustrative examples of suitable fibrous bases include inorganic fibers such as metal fibers (e.g., iron, copper, brass, bronze, aluminum), glass fibers, rock wool, wollastonite, sepiolite, attapulgite and synthetic mineral fibers; and organic fibers such as carbon fibers, aramid fibers, aramid pulp, polyimide fibers, polyamide fibers, phenolic fibers, cellulose and acrylic fibers. These fibrous bases may be used alone or as combinations of two or more thereof.

The fibrous base may be used in the form of short fibers or a powder, and is included in an amount of preferably 10 to 50 vol %, and most preferably 15 to 40 vol %, based on the overall friction material composition.

The binder is preferably a thermoset resin binder, but may be any known binder commonly used in friction materials. Illustrative examples include phenolic resins, various rubber-modified phenolic resins such as high-ortho phenolic resins modified with acrylonitrile-butadiene rubber (NBR), NBR-modified phenolic resins and acrylic rubber-modified phenolic resins, and also melamine resins, epoxy resins, NBR, nitrile rubber and acrylic rubber. Any one or combinations of two or more of these may be used. In the practice of the invention, such binders are included in an amount of preferably at least 15 vol %, more preferably 15 to 30 vol %, and most preferably 15 to 25 vol %, based on the overall friction material composition.

The filler used in the friction material composition may be composed of organic fillers and inorganic fillers. Illustrative examples of suitable organic fillers include cashew dust, tire rubber particle, rubber dust (rubber powder and granules), nitrile rubber dust (vulcanized product) and acrylic rubber dust (vulcanized product). These may be used alone or as combinations of two or more thereof. Such organic fillers are included in an amount of preferably 5 to 30 vol %, and most preferably 10 to 25 vol %, based on the overall friction material composition.

Illustrative examples of suitable inorganic fillers include slaked lime, barium sulfate, calcium carbonate, mica, vermiculite, coke, graphite and molybdenum disulfide, as well as metal powders such as iron, copper and aluminum. Such inorganic fillers are included in an amount of preferably 30 to 75 vol %, and most preferably 30 to 65 vol %, based on the overall friction material composition. In the present invention, the filler includes in particular glass spheres or beads. The glass of which the spheres or beads are made has a Vickers hardness (DPH, 300 gf) of at most 800 kg/mm², preferably 400 to 800 kg/mm², and most preferably 500 to 800 kg/mm². A Vickers hardness of more than 800 kg/mm² (DPH, 300 gf) gives rise to undesirable effects, such as increased attack of the mating surface and noise generation. Preferably, the glass is composed primarily of one or more component selected from metal oxides such as silicon dioxide (SiO₂), calcium oxide (CaO), barium oxide (BaO), titanium dioxide (TiO₂), aluminum oxide (Al₂O₃) and zinc oxide (ZnO). The glass spheres or beads typically have an average particle size of 15 to 500 µm, preferably 20 to 400 µm, more preferably 30 to 350 µm, and most preferably 40 to 300 µm.

It is advantageous for such glass to account for preferably 0.5 to 15 vol %, and most preferably 2 to 12 vol %, of on the overall composition.

Inclusion of the above-mentioned glass in the friction material composition used to practice the invention allows ceramics such as aluminum oxide, silicon oxide and zirconium oxide which have hitherto been employed as abrasive components to be excluded from the composition.

The friction material of the invention is generally produced by uniformly blending the above-described components in a suitable mixer such as a Henschel mixer, Loedige mixer or Eirich mixer, and preforming the blend in a mold. The preform is then molded at a temperature of 130 to 200° C and a pressure of 100 to 1,000 kg/cm² for a period of 2 to 15 minutes.

The resulting molded article is typically postcured by heat treatment at 140 to 250°C for a period of from 2 to 48 hours, then painted, baked and surface-ground as needed to give the finished article.

In the case of automotive disk pads, production may be carried out by placing the preform on an iron or aluminum plate that has been pre-washed, surface-treated and coated with an adhesive, molding the preform in this state within a mold, and subsequently heat-treating, painting, baking and surface-grinding.

The non-asbestos friction material of the invention can be used in a broad range of applications, including brake linings, clutch facings, disk pads, paper clutch facings and brake shoes in automobiles, large trucks, railroad cars and various types of industrial machinery.

### EXAMPLES

Examples and comparative examples are given below by way of illustration, and are not intended to limit the invention.

### Examples 1 to 6, Comparative Examples 1 to 4

Friction material compositions formulated as shown in Table 1 were uniformly blended in a Loedige mixer and preformed in a pressure mold under a pressure of 100 kg/cm² for a period of 1 to 3 minutes. Next, the preforms were molded at a temperature and pressure of 160°C and 250 kg/cm² for a period of 2 to 10 minutes, then postcured by 5 hours of heat treatment at 200°C, yielding automotive brake pads in the respective examples.

The brake pads obtained in Examples 1 to 6 and in Comparative Examples 1 to 4 were subjected to friction tests under the following conditions, and to performance evaluations under the criteria indicated below.

### <Friction Test Conditions>

a. Friction tests were carried out in accordance with JASO C406 ("Dynamometer Test of Brake System in Automobiles"). Vehicle speed, 50 km/h; braking deceleration, 0.3 G; number of braking cycles, 2,000; temperature, 100°C or 200°C.
b. Friction tests were carried out in accordance with JASO C404 ("Road Vehicle Test of Service Braking System in Automobiles").

### <Evaluation of Performance>

The performances of the friction materials produced in the examples and comparative examples were evaluated as follows.
(1) Coefficient of Friction
   Measured according to JASO C406.
(2) Mating Surface Attack
   Measured according to JASO C406. The amount of wear at the mating surface (rotor) was rated as follows.
   Very Good: slight (less than 10 µm)
   Good: moderate (10 to 20 µm)
   Fair: substantial (20 to 30 µm)
   Poor: very substantial (more than 30 µm)
(3) Noise Performance
   Measured according to JASO C404. The loudness and frequency with which noise was generated during braking were rated as follows in a road vehicle test.
   Very Good: no brake noise
   Good: almost no brake noise
   Fair: Slight noise
   Poor: Noisy
(4) Ease of Rust Removal from Mating Surface
   The test conditions were as follows: initial braking speed, 50 km/h; braking deceleration, 0.15 g; number of braking cycles, 200; brake temperature before braking, 150°C. The degree to which mating surface (rotor) rust deliberately formed prior to the test was removed by the friction material was rated as follows.
   Very Good: rust was completely removed
   Good: rust was almost removed
   Fair: some rust remained
   Poor: considerable rust remained 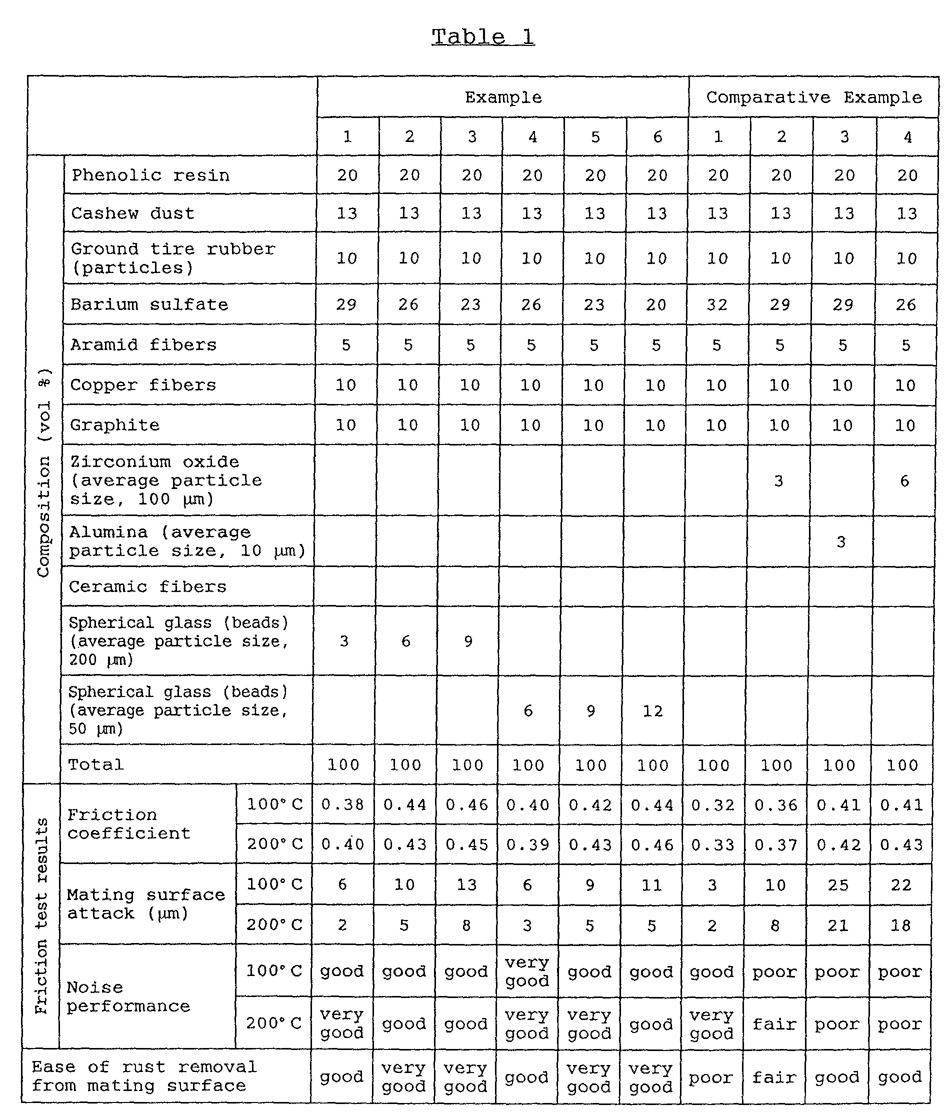
   Spherical glass (average particle size, 200 µm): Vickers hardness, 550; main constituent, Na₂O-CaO-SiO₂
   Spherical glass (average particle size, 50 µm): Vickers hardness, 660; main constituent, CaO-Al₂O₃-SiO₂

As has been discussed above and is apparent from the results in Table 1, the friction materials of the invention have a suitable coefficient of friction, facilitate rust removal from the mating surface, and minimize noise generation and mating surface attack.

Japanese Patent Application No. 2001-297037 is incorporated herein by reference.

Although some preferred embodiments have been described, many modifications and variations may be made thereto in light of the above teachings. It is therefore to be understood that the invention may be practiced otherwise than as specifically described.

## Claims

1. A non-asbestos friction material made by molding and curing a composition comprising a fibrous base other than asbestos, a binder and a filler; wherein the filler includes spheres or beads of glass having a Vickers hardness (DPH, 300 gf) of at most 800 kg/mm².

2. The non-asbestos friction material of claim 1, wherein the glass is composed primarily of at least one component selected from the group consisting of silicon dioxide, calcium oxide, barium oxide, titanium dioxide, aluminum oxide and zinc oxide.

3. The non-asbestos friction material of claim 1 or 2, wherein the glass has an average particle size of 15 to 500 µm.

4. The non-asbestos friction material of claim 1, 2 or 3, wherein the glass accounts for 0.5 to 15 vol % of the overall composition.
